## Europäisches Patentamt
## European Patent Office
## Office européen des brevets

(19)

(11) Numéro de publication : **0 209 429**
**B1**

(12)

# FASCICULE DE BREVET EUROPÉEN

(45) Date de publication du fascicule du brevet :
19.10.88

(51) Int. Cl.⁴ : **B 64 G 1/36**, G 05 D 1/08

(21) Numéro de dépôt : 86401348.7

(22) Date de dépôt : 19.06.86

(54) Procédé et dispositif d'injection de satellite sur orbite géostationnaire avec stabilisation suivant les trois axes.

(30) Priorité : 20.06.85 FR 8509394

(43) Date de publication de la demande :
21.01.87 Bulletin 87/04

(45) Mention de la délivrance du brevet :
19.10.88 Bulletin 88/42

(84) Etats contractants désignés :
DE GB IT

(56) Documents cités :
FR-A- 2 365 154
FR-A- 2 373 823

(73) Titulaire : **MATRA**
**4 rue de Presbourg**
**F-75116 Paris (FR)**

(72) Inventeur : **Lam, Do Mau**
**28 Ter, rue L. Hubert**
**F-78140 Velizy (FR)**
Inventeur : **Benoit, Alain**
**26, rue des Réservoirs**
**F-78000 Versailles (FR)**

(74) Mandataire : **Fort, Jacques**
**CABINET PLASSERAUD 84, rue d'Amsterdam**
**F-75009 Paris (FR)**

## Description

La mise à poste des satellites sur orbite géostationnaire s'effectue généralement par injection à partir d'une orbite de transfert très elliptique, au moyen d'un moteur d'apogée intervenant en une ou plusieurs fois alors que le satellite est à proximité de l'apogée de l'orbite de transfert. Lors de l'allumage du moteur et de sa combustion, le satellite doit se trouver, puis être maintenu, dans une attitude appropriée. La stabilisation peut être réalisée en maintenant le satellite en rotation. Mais une solution de plus en plus utilisée, car elle fait disparaître un certain nombre de contraintes sur la construction du satellite, consiste à injecter ce dernier en le maintenant stabilisé suivant les trois axes. On ne rencontre pas de difficulté de stabilisation au moyen des organes habituels d'application d'un couple au satellite (tuyères en général) lorsque les capteurs d'horizon terrestre et d'astre (généralement le Soleil) dont est équipé le satellite sont utilisables lors du fonctionnement du moteur d'apogée. Mais bien souvent le capteur d'horizon terrestre est orienté, lors du fonctionnement de ce moteur, de façon telle qu'il ne peut être utilisé. Le document FR-A-2 373 823, qui prévoit de stabiliser le satellite durant l'injection par échange de moments cinétiques entre le corps du véhicule et au moins une roue à inertie et par application de moments externes, associe un miroir au capteur d'horizon terrestre pour pouvoir l'utiliser pendant l'injection. Cette solution a l'inconvénient d'exiger un organe mobile supplémentaire.

On a également utilisé d'autres palliatifs, dont le plus fréquent consiste à prévoir des gyromètres permettant des mesures suivant trois axes.

Cette solution présente un certain nombre d'inconvénients. Les besoins de mesure suivant trois axes et de redondance conduisent à utiliser une configuration géométrique, mal adaptée aux modes ultérieurs de la mission. La manœuvre d'orientation correcte est fréquemment décomposée en deux rotations, dont la première ne conserve pas le pointage du satellite vers la Terre, ce qui demande une utilisation des gyromètres sur une gamme de vitesses et d'angles importante. Il est donc nécessaire de calibrer les gyromètres pour déterminer leur facteur d'échelle au cours d'une phase préliminaire, qui implique de comparer les signaux fournis par les gyromètres à ceux donnés par le capteur d'horizon terrestre et le capteur d'astre.

L'invention vise à fournir un procédé d'injection, sur orbite géostationnaire, d'un satellite stabilisé autour de trois axes par un processus relativement simple et, surtout, permettant d'obtenir une précision élevée et ce sans utiliser des moyens importants en plus de ceux indispensables pour le fonctionnement à poste.

Par rapport au document FR-A-23 73 823 qui décrit déjà un procédé d'injection sur orbite géostationnaire d'un satellite stabilisé autour de trois axes portant un capteur d'horizon terrestre, un capteur d'astre (généralement le Soleil) proche du plan équatorial et deux gyromètres de mesure de rotation autour de deux axes (l'axe de roulis et l'axe de lacet du satellite, ou coplanaires) ainsi que des organes de commande d'attitude tels que des tuyères, le capteur d'horizon terrestre étant placé de telle sorte que son champ d'observation n'inclue pas la Terre lors de l'allumage du moteur d'apogée, le capteur d'astre étant disposé sensiblement suivant l'axe de roulis du satellite, l'invention propose un procédé comportant les étapes successives suivantes :

(1) le satellite est mis en rotation autour d'un axe dirigé vers ledit astre jusqu'à ce qu'on détecte le passage de la Terre dans le champ du capteur d'horizon terrestre et on arrête le satellite dans une position telle que son axe de lacet, correspondant à la direction de poussée du moteur d'apogée, est dirigé vers la Terre,

(2) on maintient l'axe de lacet du satellite parallèle à lui-même pendant un temps suffisant pour déterminer la dérive des gyromètres,

(3) on ramène éventuellement l'axe de lacet du satellite en alignement avec la Terre puis on fait tourner le satellite autour de l'axe de lacet en conservant la référence terrestre grâce au capteur d'horizon terrestre, jusqu'à ce que l'axe de tangage soit dans une position de consigne prédéterminée, perpendiculaire au plan de l'orbite de transfert à la correction de ramenée dans le plan équatorial près, la venue dans la position de consigne étant déterminée à l'aide du capteur d'astre sans intervention des gyromètres, et

(4) on amène le moteur d'apogée dans l'orientation de tir par rotation du satellite autour de l'axe de tangage, la venue dans l'orientation de tir étant déterminée à l'aide du capteur d'astre (qui doit alors présenter un champ suffisant), les gyromètres étant alors utilisés en détecteurs à vitesse nulle, ce qui écarte la nécessité d'un calibrage de leur facteur d'échelle, pour maintenir en position l'axe de tangage.

Grâce à cette décomposition originale de la manœuvre en ses deux opérations (orientation autour de la direction géocentrique, puis orientation autour d'une direction perpendiculaire), on peut utiliser le capteur d'horizon terrestre pendant une partie importante de la manœuvre. La détection gyrométrique n'intervient que dans un plan, au lieu de devoir être effectuée selon trois axes. Les gyromètres sont utilisés dans des conditions où ils donnent une grande précision et sans qu'il soit nécessaire de déterminer leur facteur d'échelle.

Le procédé sera complété, au cours du fonctionnement du moteur d'apogée, par une commande d'attitude effectuée à l'aide du gyromètre de roulis et du capteur d'astre. Le moteur d'apogée pourra intervenir une seule fois ou en plusieurs fois, chacune au passage à proximité de l'apogée. Là encore, le gyromètre de roulis travaille toujours à vitesse pratiquement nulle.

L'invention se rapporte également à un dispositif d'injection sur orbite selon le préambule de la revendication 3, ce préambule correspondant à l'art antérieur cité ci-dessus. Selon l'invention, ce dispositif est caractérisé par la partie caractérisante de la revendication 3.

L'invention sera mieux comprise à la lecture de la description qui suit d'un mode particulier d'exécution donné à titre d'exemple non limitatif. La description se réfère aux dessins qui l'accompagnent, dans lesquels :

— la Figure 1 est un schéma de principe montrant la disposition de capteurs sur un satellite permettant la mise en œuvre de l'invention ;

— la Figure 2 est un schéma de principe destiné à faire apparaître les modifications d'orientation à apporter à un système d'axes liés au satellite au cours de la mise en œuvre du procédé suivant l'invention ;

— la Figure 3 est un schéma de principe montrant une disposition possible des axes du satellite alors que ce dernier vient d'être amené sur son orbite de transfert ;

— la Figure 4, similaire à la Figure 3, montre les modifications d'orientation à apporter au cours d'une phase finale de mise en œuvre du procédé suivant l'invention ;

— la Figure 5 est un synoptique de principe montrant les éléments du dispositif de pilotage du satellite qui interviennent pour la mise en œuvre du procédé suivant l'invention.

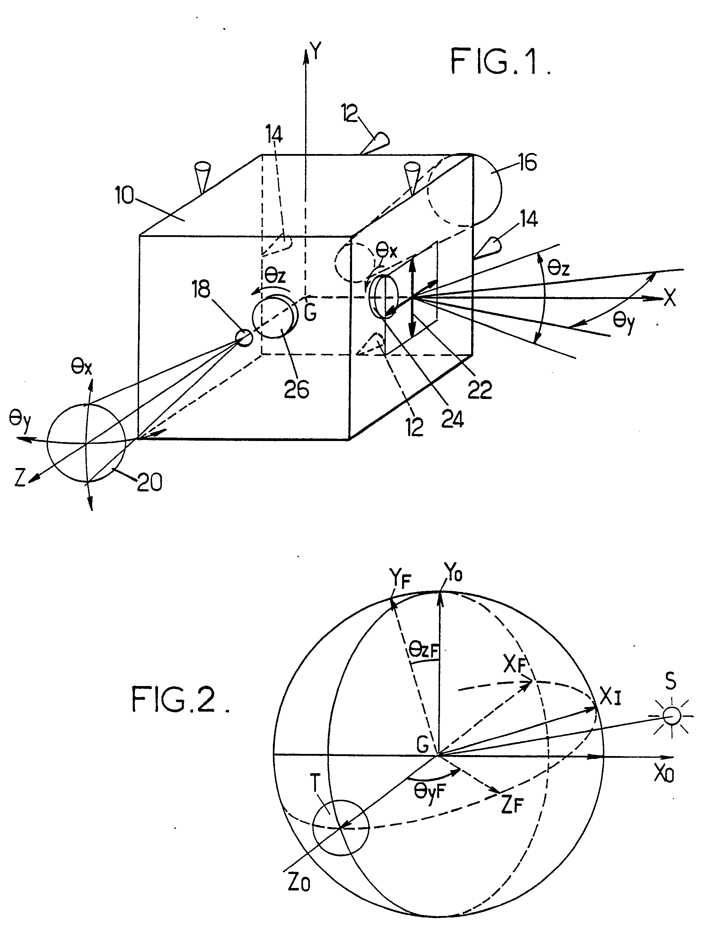

Le satellite dont un schéma de principe est montré en Figure 1 peut être regardé comme comportant un axe de lacet GZ qui, lorsque le satellite sera à poste sur une orbite géostationnaire, devra être dirigé vers là Terre, un axe de roulis GX qui sera alors tangent à l'orbite et un axe GY perpendiculaire aux deux précédents. Le corps 10 du satellite contient des moyens de pilotage et notamment des roues ou volants d'inertie (non représentés) destinés à commander l'attitude du satellite par échange de moments. Le système de pilotage comporte également des tuyères destinées à appliquer des moments de correction par éjection de gaz, généralement disposées par paire. Les changements d'orientation en roulis peuvent par exemple être commandés à l'aide de tuyères 12, les changements d'orientation en tangage par des tuyères 14. Enfin, le satellite porte un moteur d'apogée 16 disposé généralement sensiblement suivant l'axe de lacet.

Le pilotage exige de disposer de références d'attitude du satellite par rapport à des astres. En règle générale, l'un de ces astres est la Terre dans le cas d'un satellite géostationnaire. Le corps 10 du satellite porte en conséquence un capteur d'horizon terrestre 18 placé de façon qu'il puisse voir la Terre lorsque le satellite est dans son attitude normale, donc dirigé suivant l'axe de lacet GZ. Un tel capteur permettra de déterminer, dans une plage schématisée en 20, les écarts $\theta_x$ et $\theta_y$ autour d'une position nominale.

Le second astre utilisé est fréquemment le Soleil, bien que l'on puisse également utiliser un astre dont la direction de visée fait un angle faible par rapport au plan de l'orbite. Le corps 10 comporte en conséquence un capteur d'objet stellaire, qu'on supposera par la suite être un capteur solaire 22. Ce capteur permet de mesurer, dans un domaine de visée donné, les écarts $\theta_y$ et $\theta_z$ de l'axe de roulis GX par rapport à une position nominale. Pour faire apparaître ces deux directions de sensibilité, le capteur solaire est schématisé sur la Figure 1 sous forme d'une croix 22.

Pour permettre la mise en œuvre de l'invention, le satellite doit encore être muni de moyens permettant de détecter les rotations autour des axes GX et GZ. Ces moyens de mesure sont représentés schématiquement sur la Figure 1 sous forme de gyromètres 24 et 26. Comme on le verra plus loin, ces gyromètres n'interviendront, au moins au cours de la phase de mise à poste, que pour détecter des écarts faibles à partir d'une position de consigne et, donc à vitesse en moyenne nulle.

La Figure 2 montre, en tirets, les orientations $X_F$, $Y_F$, $Z_r$ à donner aux axes du satellite par rapport à la Terre T et au Soleil S avant allumage du moteur d'apogée et, en traits pleins, les orientations $X_0$, $Y_0$, $Z_0$ initiales. Une étape intermédiaire de la manœuvre correspond aux orientations $X_i$, $Y_F$, $Z_0$.

Immédiatement après avoir été placé sur l'orbite de transfert 28, le corps du satellite 10 peut avoir une orientation quelconque. La première opération consiste à changer l'orientation, généralement à l'aide des tuyères, pour amener l'axe de lacet vers la Terre. Pour cela, on fait tourner le satellite autour d'un axe dirigé vers un astre identifiable à l'aide du capteur d'astre 22. L'astre utilisé sera généralement le Soleil S, qui a l'avantage d'être proche du plan de l'orbite de transfert 28 et qui ne pose aucun problème de sélection parmi la multitude des étoiles présentes dans le ciel.

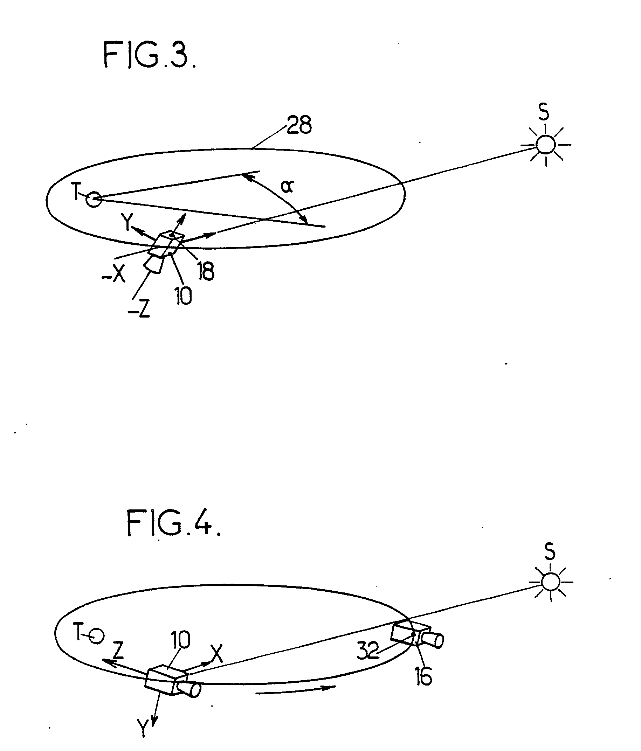

Dans le cas le plus défavorable, la Terre T et le Soleil S sont initialement hors du champ de vision des capteurs correspondants 18 et 22. Une opération préliminaire consistera alors à acquérir le Soleil S à l'aide du capteur 22, ou d'un capteur supplémentaire à grand champ et à précision réduite. Une fois le Soleil dans le champ du capteur 22, comme illustré en Figure 3, on fait tourner le satellite autour de la direction du Soleil pour que la Terre T défile dans le champ du capteur 18. A partir de là, il devient possible d'aligner avec précision l'axe de lacet GZ du satellite avec le centre de la Terre T : l'attitude du satellite est alors celle indiquée par $X_0$, $Y_0$, $Z_0$ sur la Figure 2.

Après ce réglage d'orientation, on procède à la mesure de la dérive constante des gyromètres 24 et 26. Pour cela, on stabilise l'orientation du satellite pendant qu'il parcourt son orbite 28, en utilisant, pour commander les tuyères, les signaux fournis par les capteurs 18 et 22 et les caractéristiques de la trajectoire (grand axe, petit axe et inclinaison sur le plan équatorial) antérieurement prédéterminées. Du fait que l'on dispose de références à deux astres, cette mesure peut être effectuée avec une grande précision.

Pour chacune des deux directions angulaires $\theta_x$ et $\theta_z$, cette dérive est de la forme

$$d = (-\theta + \int_0^t \omega \cdot dt)/t$$

où t désigne le temps, $\omega$ l'information délivrée par un gyromètre et $\theta$ l'attitude angulaire reconstituée à l'aide des capteurs 18 et 22.

Une fois la mesure de dérive effectuée, il est possible de passer à l'étape suivante de la manœuvre (Figure 2). Elle consiste, après avoir ramené l'axe de lacet GZ dans la direction $GZ_0$ de la Terre (ou avoir attendu de revenir au point de l'orbite pour lequel il y a alignement) à faire tourner le satellite autour de l'axe $GZ_0$ jusqu'à ce que l'axe de tangage GY soit dans l'orientation de consigne $GY_F$, perpendiculaire au plan de l'orbite de transfert 28 à la correction de ramenée dans le plan équatorial 30 près.

Cette correction, rendue nécessaire du fait qu'on doit pouvoir tolérer un angle entre plan équatorial et plan de l'orbite atteignant 27°, peut être calculée à partir des caractéristiques de l'orbite. Le changement d'orientation s'effectue sans utilisation des gyromètres, par mesure de l'angle $\theta_{ZF}$ (Figure 2) à l'aide du capteur 22.

Par rotation $\theta_{YF}$ autour de l'axe de tangage GY, maintenant dirigé suivant $Y_F$, on amène enfin le moteur d'apogée dans l'orientation de tir, montrée en Figure 4. L'orientation $Y_F$ n'étant plus matérialisée par un corps céleste et la Terre T quittant dès le début de la manœuvre le champ de vision du capteur 18, la commande sera effectuée en utilisant les signaux fournis par :

— le capteur solaire 22, qui doit avoir dans la direction $\theta_y$ un champ suffisant ou comporter plusieurs détecteurs intervenant en succession, pour contrôler l'amplitude de la rotation,

— les gyromètres 24 et 26, pour maintenir l'axe de tangage fixe.

Mais il est essentiel de noter que les gyromètres sont alors utilisés à vitesse quasiment nulle, puisque les signaux qu'ils fournissent constituent toujours des signaux d'erreur suivant les directions angulaires $\theta_x$ et $\theta_z$, signaux qui seront annulés par correction à l'aide des tuyères. Le maintien de l'axe de tangage GY dans la direction $Y_F$ pourra donc être assuré avec une grande précision, en tenant uniquement compte des dérives précédemment mesurées.

Une fois l'orientation correcte obtenue, elle sera maintenue jusqu'à l'instant de l'allumage, à proximité de l'apogée 32 (Figure 4), puis pendant la combustion du moteur 16, avec contrôle à partir du signal de zéro du gyromètre de roulis 24 et du capteur solaire 22.

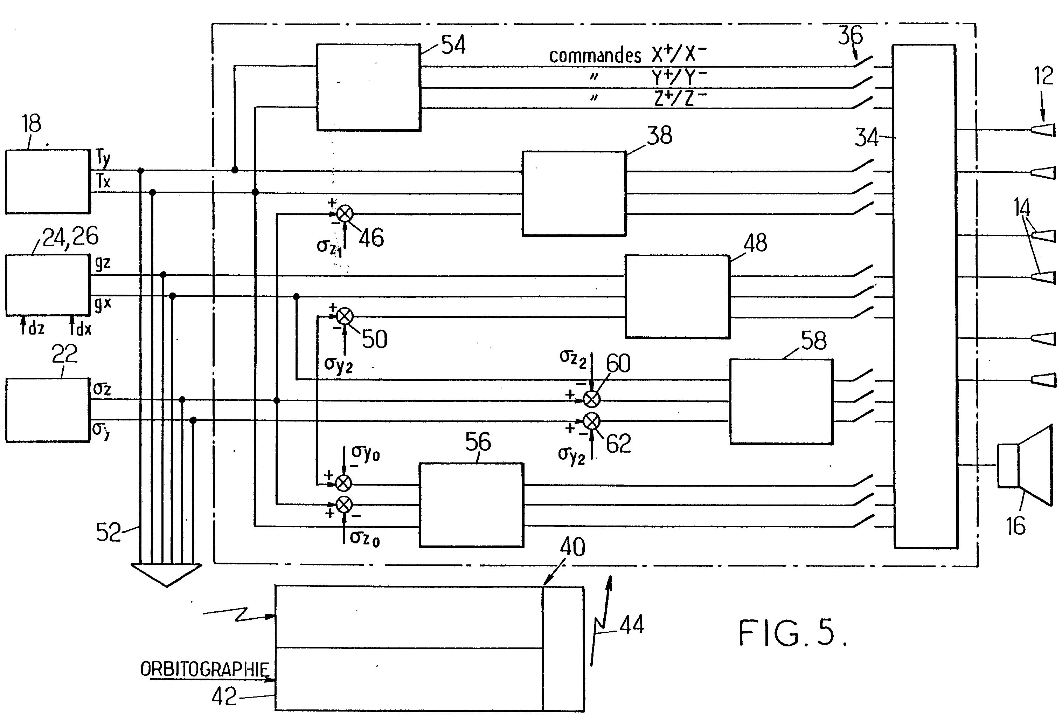

Le dispositif de pilotage peut notamment avoir la constitution de principe montrée en Figure 5, réalisable en composants couramment utilisés dans les systèmes actuels. Ce dispositif comprend un interface 34 de commande des tuyères 12 à partir des signaux élaborés par des circuits de manœuvre autour des différents axes et intervenant en des phases successives de la mise en œuvre du procédé, les possibilités d'intervention étant schématisées par la présence d'interrupteurs 36.

Un circuit 38 de manœuvre autour de l'axe de lacet GZ est prévu pour recevoir des signaux d'entrée $T_y$, $T_x$ et $\sigma_z - \sigma_{z1}$. Les signaux $T_y$ et $T_x$ sont fournis par le capteur terrestre 18 et correspondent aux écarts $\theta_y$ et $\theta_x$ (Figure 1). Le signal $\sigma_z - \sigma_{z1}$ représente la différence entre le signal $\sigma_z$ fourni par le capteur solaire 22 et représentant $\theta_z$ et une valeur de consigne $\sigma_{z1}$. Cette valeur $\sigma_{z1}$, ainsi que les autres valeurs dont il sera question plus loin, est déterminée par un organe de calcul 42 d'une station au sol 40 recevant des données d'orbitographie et elle est transmise au satellite par voie hertzienne, comme indiqué en 44. Le signal $\sigma_z - \sigma_{z1}$ est élaboré par un soustracteur 46.

Un circuit 48 de manœuvre autour de Y présente une constitution similaire à celle du précédent et reçoit des signaux de sortie $g_z$ et $g_x$ de gyromètres intégrateurs 24, 26 et un signal $\sigma_y - \sigma_{y2}$ élaboré par un soustracteur 50 à partir d'un signal provenant d'un capteur d'astre 22 et d'un signal de consigne $\sigma_{y2}$. Les dérives $d_x$ et $d_z$ des gyromètres 24, 26 sont déterminées au sol au cours de la seconde étape, par pointage inertiel en utilisant des télémesures schématisées en 52.

Le dispositif comporte encore un circuit de pointage géocentrique 54 et un circuit de pointage inertiel 56. Le premier commande les changements d'orientation suivant les trois axes, par alimentation des tuyères appropriées à partir des signaux $T_y$ et $T_x$. Le circuit de pointage inertiel au contraire est prévu pour réagir aux signaux d'entrée :

$\sigma_y - \sigma_{y0}$
$\sigma_z - \sigma_{z0}$
$T_x$

$\sigma_{z0}$ et $\sigma_{y0}$ étant des valeurs de consigne utilisées au cours de la première étape, avant $\sigma_{z1}$, puis $\sigma_{y2}$ et $\sigma_{z2}$.

Le moteur d'apogée 16 est de son côté commandé par un circuit 58 qui reçoit des signaux d'entrée :

$g_x$ des gyromètres intégrateurs,
$\sigma_z - \sigma_{z2}$ d'un soustracteur 60,
$\sigma_y - \sigma_{y2}$ d'un soustracteur 62.

Les différents circuits interviennent, au cours de la mission, pour ramener à zéro successivement les entrées des circuits 54, 56, 38, 48 et 58, suivant des lois de contrôle qui découlent directement des fonctions à remplir.

## Revendications

1. Procédé d'injection sur orbite géostationnaire d'un satellite stabilisé autour de trois axes, portant un capteur terrestre, un capteur d'astre proche du plan équatorial, deux gyromètres (24, 26) de mesure de rotation autour de l'axe de roulis (GX) et de l'axe de lacet (GZ) du satellite et des organes de commande d'attitude tels que des tuyères, le capteur d'horizon terrestre étant placé de telle sorte que son champ d'observation n'inclue pas la Terre lors de l'allumage du moteur d'apogée, le capteur d'astre étant disposé sensiblement suivant l'axe de roulis du satellite, caractérisé en ce qu'il comporte les étapes suivantes :

(1) on fait tourner le satellite autour d'un axe dirigé vers ledit astre jusqu'à ce que la Terre passe dans le champ du capteur d'horizon terrestre et on arrête le satellite (10) dans une position telle que son axe de lacet (G$_Z$), correspondant à la direction de poussée du moteur d'apogée (16), · est dirigé vers la Terre,

(2) on maintient l'axe de lacet du satellite parallèle à lui-même pendant un temps suffisant pour déterminer la dérive des gyromètres (24, 26),

(3) on ramène éventuellement l'axe de lacet du satellite en alignement avec la Terre puis on fait tourner le satellite autour de l'axe de lacet en conservant la référence terrestre grâce au capteur d'horizon terrestre (18), jusqu'à ce que l'axe de tangage (GZ) soit dans une position de consigne prédéterminée, perpendiculaire au plan de l'orbite de transfert à la correction de ramenée dans le plan équatorial près, la venue dans la position de consigne étant déterminée à l'aide du capteur d'astre (22) sans intervention des gyromètres, et

(4) on amène le moteur d'apogée dans l'orientation de tir par rotation du satellite autour de l'axe de tangage, la venue dans l'orientation de tir étant déterminée à l'aide du capteur d'astre, les gyromètres (24, 26) étant alors utilisés en détecteurs à vitesse nulle.

2. Procédé selon la revendication 1, caractérisé en ce qu'il comporte :

(5) une phase ultérieure de fonctionnement du moteur d'apogée au cours de laquelle on commande l'attitude du satellite en utilisant le gyromètre de roulis et le capteur d'astre.

3. Dispositif d'injection sur orbite géostationnaire par mise en œuvre du procédé selon la revendication 1 ou 2, comprenant des gyromètres intégrateurs (24, 26), un capteur d'horizon terrestre (18), un capteur d'astre (22) et des moyens de commande de tuyères de modification d'orientation, caractérisé en ce que le capteur d'horizon terrestre (18) est dirigé suivant l'axe de lacet (GZ) et ne permet de voir la terre que lorsque le satellite est dans son attitude normale à poste, et que le capteur d'astre (22) est disposé sensiblement suivant l'axe de roulis (GX) du satellite, lesdits moyens de commande comprenant un circuit de commande de manœuvre autour de l'axe de lacet recevant des signaux d'entrée provenant du capteur terrestre et du capteur d'astre et un circuit de pointage inertiel (56) recevant des signaux provenant des capteurs (18, 24), lesdits circuits étant constitués de façon à permettre de commander successivement la rotation du satellite autour d'un axe dirigé vers l'astre vu par le capteur d'astre (22) jusqu'à ce que la terre passe dans le champ du capteur d'horizon terrestre, le maintien de l'axe de lacet du satellite parallèle à lui-même, le déplacement de l'axe de lacet jusqu'à le ramener en alignement avec la terre, la rotation du satellite autour de l'axe de lacet en conservant la référence terrestre et la venue du moteur d'apogée dans l'orientation de tir.

## Claims

1. A method of injection into a geostationary orbit of a satellite stabilized around three axes and carrying an Earth sensor, a sensor of a heavenly body near the equatorial plane, two gyrometers (24, 26) for measuring rotation around the roll axis (GX) and the yaw axis (GZ) of the satellite and attitude control means such as thrusters, the Earth horizon sensor being so disposed that its field of view does not include the Earth when the apogee booster is ignited, the heavenly-body sensor being disposed substantially along the roll axis of the satellite, the method being characterized in that it comprises the following steps :

(1) the satellite is rotated around an axis directed towards the heavenly body until the Earth enters the field of the Earth horizon sensor and the satellite (10) is stopped in a position such that its yaw axis (GZ) corresponding to the direction of thrust of the apogee booster (16) is directed towards the Earth,

(2) the yaw axis of the satellite is kept parallel to its original position for a sufficient time to measure the drift of the gyrometers (24, 26),

(3) if required the yaw axis of the satellite is brought back into alignment with the Earth, after which the satellite is rotated around the yaw axis while retaining the Earth reference by means of the Earth horizon sensor (18), until the pitch axis (GY) is in a predetermined set position perpendicular to the plane of the transfer orbit except for the correction for returning to the equatorial plane, arrival in the set position being determined by the heavenly-body sensor (22) without use of the gyrometers, and

(4) the apogee booster is brought into the firing orientation by rotating the satellite around the pitch axis, arrival at the firing orientation being determined by the heavenly-body sensor, the gyrometers (24, 26) being then used as detectors at zero speed.

2. A method according to claim 1, characterized in that it comprises :

(5) an additional operating step of the apogee booster during which the attitude of the satellite is controlled by using the roll gyrometer and the heavenly-body sensor.

3. A device for injection into a geostationary orbit by the method according to claim 1 or 2, comprising integrating gyrometers (24, 26), an Earth horizon sensor (18), a heavenly-body sensor (22) and means for controlling thrusters for modifying the orientation, characterized in that the Earth horizon sensor (18) is directed along the yaw axis (GZ) and enable the Earth to be seen only when the satellite is in position in its normal attitude, and the heavenly-body sensor (22) is disposed substantially along the roll axis (GX) of the satellite, the control means comprising a circuit for controlling manœuvring around the yaw axis and receiving input signals from the Earth sensor and the heavenly-body sensor and an inertial aiming circuit (56) receiving signals from the sensors (18, 24), the circuits being so constructed as successively to control rotation of the satellite around an axis directed towards the heavenly body seen by the heavenly-body sensor (22) until the Earth enters the field of the Earth horizon sensor ; maintenance of the yaw axis of the satellite parallel to its original position ; movement of the yaw axis until it is brought into alignment with Earth ; rotation of the satellite around the yaw axis while preserving the Earth reference ; and the movement of the apogee booster into the firing orientation.

**Patentansprüche**

1. Verfahren zum Einbringen eines Satelliten auf eine geostationäre Bahn mit Stabilisierung um drei Raumachsen mit einem terrestrischen Sensor, einem Sternsensor nahe der Äquatorialebene, zwei Gyrometern (24, 26) zum Messen der Drehbewegung um die Rollachse (GX) und die Kursachse (GZ) des Satelliten und Steuerungsorganen in Form von Düsen, wobei der terrestrische Sensor derart angeordnet ist, daß sein Beobachtungsfeld die Erde bei der Zündung eines Apogäumstriebwerks nicht einschließt, wobei der Sternsensor genau der Rollachse des Satelliten folgend angeordnet ist, dadurch gekennzeichnet,

(1) daß der Satellit um eine zu den Sternen gerichtete Achse gedreht wird, bis die Erde in das Feld des terrestrischen Sensors gelangt, und der Satellit (10) in einer Stellung angehalten wird, in welcher seine Kursachse (GZ), welche mit der Schubrichtung des Apogäumstriebwerks (16) übereinstimmt, gegen die Erde gerichtet ist,

(2) daß die Kursachse des Satelliten parallel zur Achse desselben während einer Zeit gehalten wird, welche zur Bestimmung der Drift der Gyrometer (24, 26) ausreicht,

(3) daß die Kursachse des Satelliten in eine Linie mit der Erde zurückgebracht wird, dann der Satellit um die Kursachse unter Beibehaltung des terrestrischen Bezugspunktes durch den terrestrischen Sensor (18) gedreht wird, bis die Nickachse (GY) sich in einer vorbestimmten Position befindet, welche rechtwinklig zur Übertragungsbahnebene mit der Korrektur der Zurückbewegung in der nahen Äquatorialebene ist, wobei die Ankunft in der vorbestimmten Position mit Hilfe des Sternsensors (22) ohne die Gyrometer bestimmt wird, und

(4) daß das Apogäumstriebwerk in eine Zündungsrichtung zur Drehung des Satelliten um die Nickachse gebracht wird, wobei die Ankunft in der Zündungsrichtung mit Hilfe des Sternsensors bestimmt wird und die Gyrometer (24, 26) dann zur Bestimmung der Nullgeschwindigkeit gebraucht werden.

2. Verfahren nach Anspruch 1, dadurch gekennzeichnet,

(5) daß es eine spätere Funktionsphase des Apogäumstriebwerks umfaßt, während welcher die Stellung des Satelliten mittels des Gyrometers um die Rollachse und des Sternsensors bestimmt wird.

3. Vorrichtung zum Einbringen auf eine geostationäre Bahn zur Durchführung des Verfahrens nach Anspruch 1 oder 2 mit integrierten Gyrometern (24, 26), einem terrestrischen Sensor (18), einem Sternsensor (22) und düsenförmigen Steuerungsmitteln zur Richtungsänderung, dadurch gekennzeichnet, daß der terrestrische Sensor (18) der Kursachse (GZ) folgend angeordnet ist und einen Sichtkontakt mit der Erde, wenn der Satellit sich in seiner normalen Stellung befindet, nicht erlaubt, und daß der Sternsensor (22) genau der Rollachse (GX) des Satelliten folgend angeordnet ist, wobei die Steuerungsmittel eine Steuerungsschaltung zur Steuerung um die Kur- sachse, welche Eingangssignale vom terrestri- schen Sensor und vom Sternsensor erhalten, und eine Schaltung zur Startkontrolle (56) aufweisen, welche Signale von den Sensoren (18, 24) empfängt, wobei die Schaltungen derart ausgebildet sind, daß diese nacheinander die Drehbewegung des Satelliten um eine gegen die Sterne gerichtete Achse, welche durch den Sternsensor (22) überwacht wird, bis die Erde in das Feld des terrestrischen Sensors gelangt, die Aufrechterhaltung der Kursachse des Satelliten parallel zu demselben, die Verschiebung der Kursachse, bis der Satellit in eine Linie mit der Erde zurückgebracht ist, die Drehbewegung des Satelliten um die Kursachse unter Beibehaltung des terrestrischen Bezugspunktes und die Ankunft des Apogäumstriebwerks in der Zündungsstellung steuern.

# FIG.1.

# FIG.2.

1

FIG.3.

FIG.4.

FIG. 5.

commandes X⁺/X⁻

" Y⁺/Y⁻

" Z⁺/Z⁻

ORBITOGRAPHIE

0 209 429